# EUROPEAN PATENT APPLICATION

(11) **EP 1 445 164 A2**
(43) Date of publication of application: **11.08.2004**
(21) Application number: 04000830.2
(22) Date of filing: 16.01.2004
(51) Int. Cl.: B62B 1/12

(54) **Cart**

(30) Priority: 04.02.2003 IT PD20030008 U
(71) Applicant: GIMI S.R.L., 35043 MONSELICE (Prov. of Padova) (IT)
(72) Inventor: Miola, Adriano, 35024 Bovolenta (Prov. of Padova) (IT)
(74) Representative: Modiano, Guido, Dr.-Ing.

(57) **Abstract**

A carryall cart that comprises a base platform (11), which lies between two wheels (12) and a supporting stand (18), and a handlebar (20) for towing/pushing, which is pivoted, parallel to the rotation axis of the wheels (12), to the base platform (11) by one of its lower ends (22); the cart is provided with means (27) for the reversible locking of the handlebar (20) in the active position, in which it is substantially perpendicular to the base platform; the reversible locking means (27) comprise at least one elastically deformable tab (28) that locks by way of its tip the lower end (22) of the handlebar (20) on a corresponding abutment (30) of the base platform (11) that is arranged opposite the tab (28); the reversible locking means (27) further comprise an actuation system for releasing the tab (28) that can be actuated preferably with one's foot.

## Description

The present invention relates to a carryall cart.

Various types of carryall cart designed to be towed are currently known.

One typical use of these carts occurs in day-to-day use for carrying goods for example from a supermarket to one's home, particularly in residential areas where motor vehicle traffic is prohibited.

A carryall cart is disclosed for example in EPA 98106281.3 filed on April 6, 1998 by this same Applicant.

Such document describes a carryall cart whose structure comprises a supporting base made of tubular elements that are arranged in a bridge-like configuration between two supports for the axle of a pair of wheels and a stand that is parallel to said axle.

The ends of a tubular handlebar shaped like an inverted U are rotatably coupled to the axle of the wheels.

The rotation of the handlebar is locked in the active position (open position), at right angles to the supporting base, inside receptacles that have openings for the insertion of the ends of the handlebar that are provided with elastically deformable wings.

Such wings ensure that the handlebar is retained inside the receptacles and therefore in the active position.

The handlebar can rotate for closure onto the base until it assumes a configuration that provides minimum space occupation (closed position).

This and other types of cart, although commercially available for considerable time and appreciated for their features of low weight and reliability, are not free from drawbacks and in any case have aspects that can be perfected.

One of the main drawbacks that can be found consists in that locking and releasing the handlebar from the active position is scarcely practical, since the user has to apply a certain force with his hands while keeping the base motionless with his foot.

Moreover, when the handlebar is turned into the most compact configuration and the cart is arranged for example vertically, the wheels can rotate freely, unbalancing said cart and making it fall.

The aim of the present invention is to provide a carryall cart that solves the drawbacks noted in known types.

Within this aim, an object of the present invention is to provide a carryall cart that is composed of components that can be easily manufactured and assembled together.

Another object of the present invention is to provide a carryall cart that when not in use assumes and retains easily a very compact position.

Another object of the present invention is to provide a carryall cart that can be manufactured with known equipment and technologies.

This aim and these and other objects that will become better apparent hereinafter are achieved by a carryall cart that comprises a base platform, which lies between two wheels and a supporting stand, and a handlebar for towing/pushing, which is pivoted, parallel to the rotation axis of said wheels, to said base platform by one of its lower ends, said cart being provided with means for the reversible locking of said handlebar in the active position, in which it is substantially perpendicular to said base platform, said carryall cart being characterized in that said reversible locking means comprise at least one elastically deformable tab that locks by way of its tip said lower end on a corresponding abutment of said platform that is arranged opposite said tab, and an actuation system for releasing said tab that can be actuated preferably with one's foot.

Further characteristics and advantages of the present invention will become better apparent from the following detailed description of a preferred but not exclusive embodiment thereof, illustrated by way of non-limiting example in the accompanying drawings, wherein:

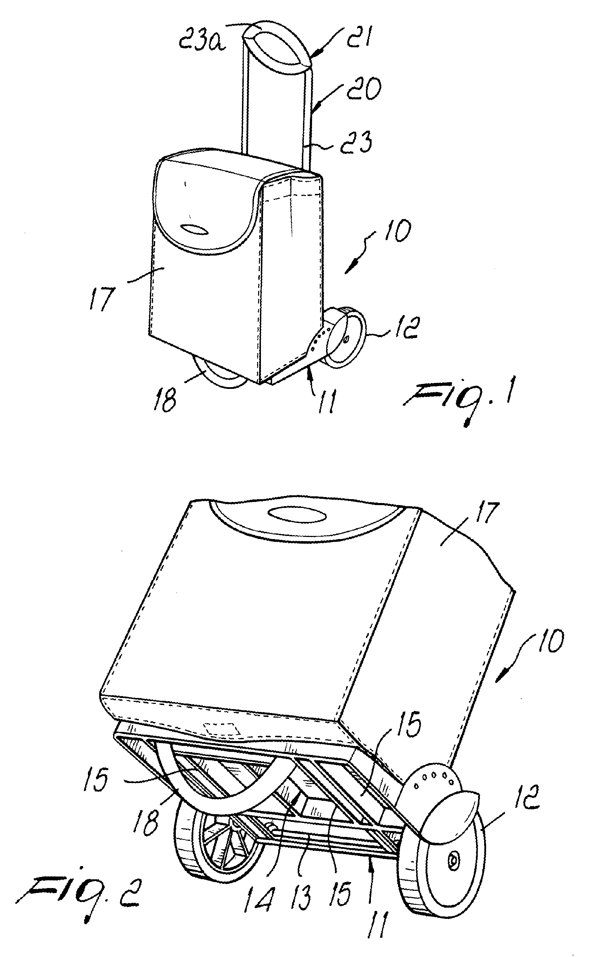

Figure 1 is a perspective view of the cart according to the invention with an associated carrier bag;

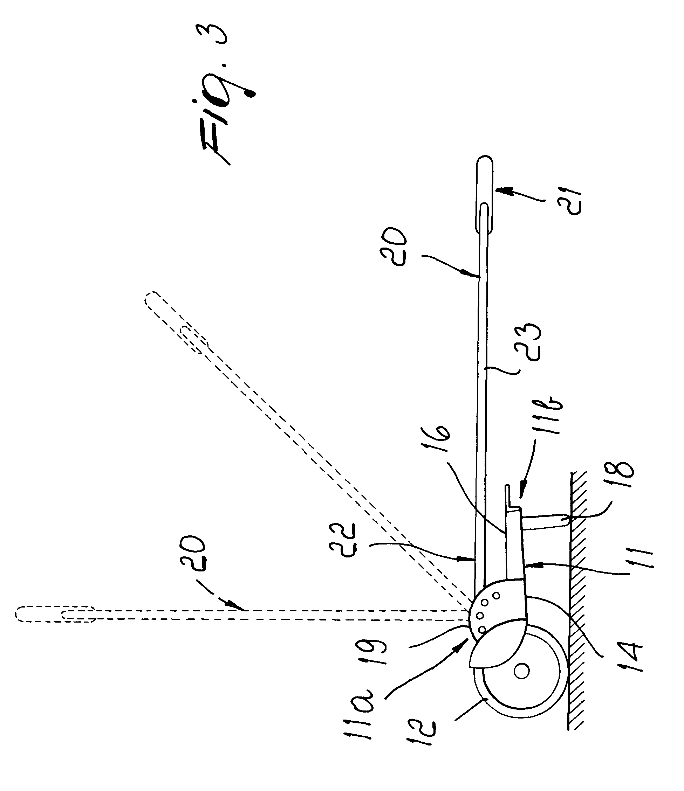

Figure 2 is a perspective view of a detail of the cart according to the invention;

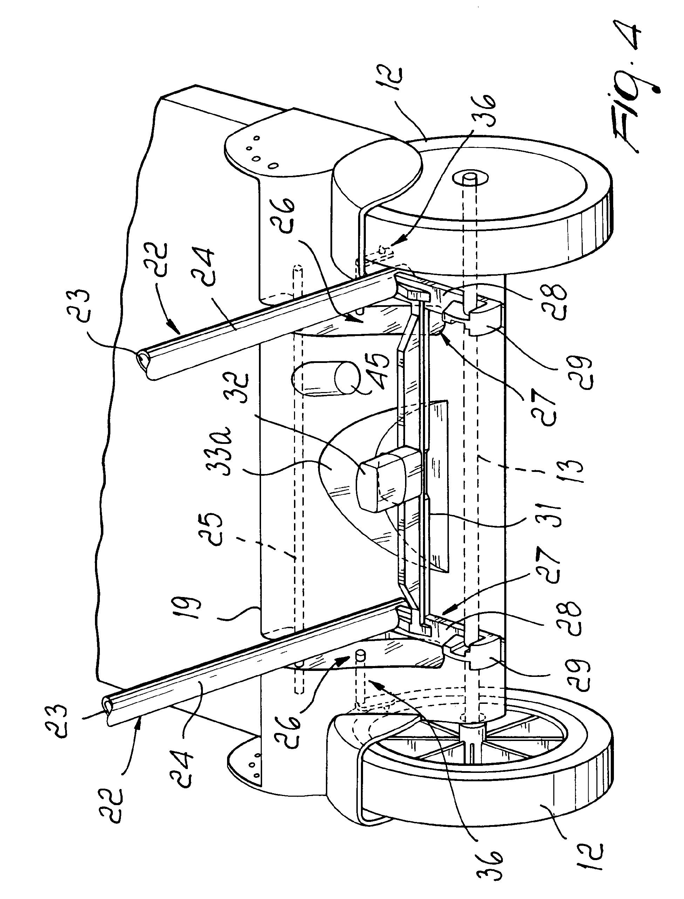

Figure 3 is a side view of the cart according to the invention, illustrating three different positions that can be assumed by the handlebar;
Figure 4 is a perspective view of a portion of the cart according to the invention, illustrating some details that are not visible;

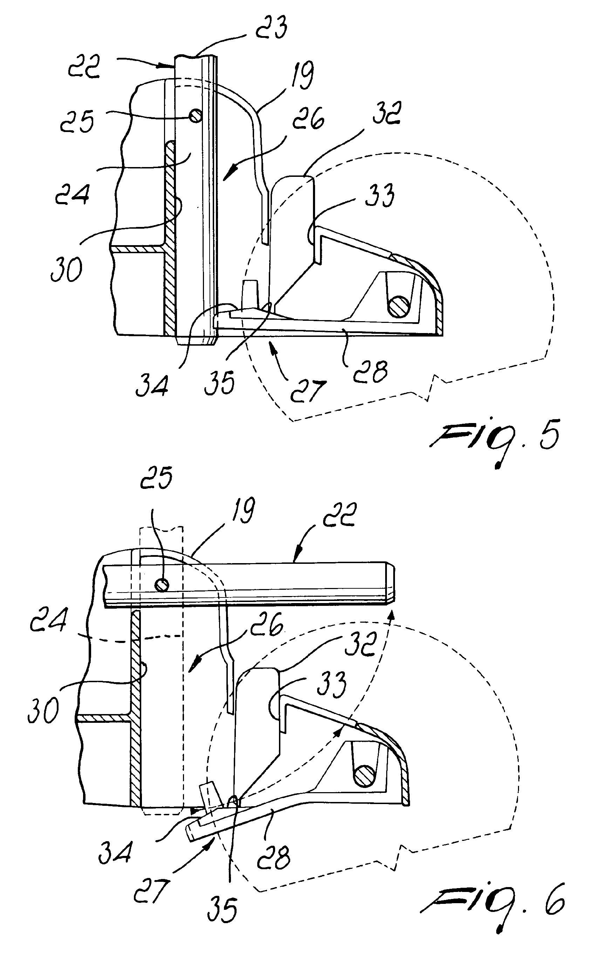

Figure 5 is a partially sectional side view of a detail of the cart according to the invention, with the handlebar in the active position;

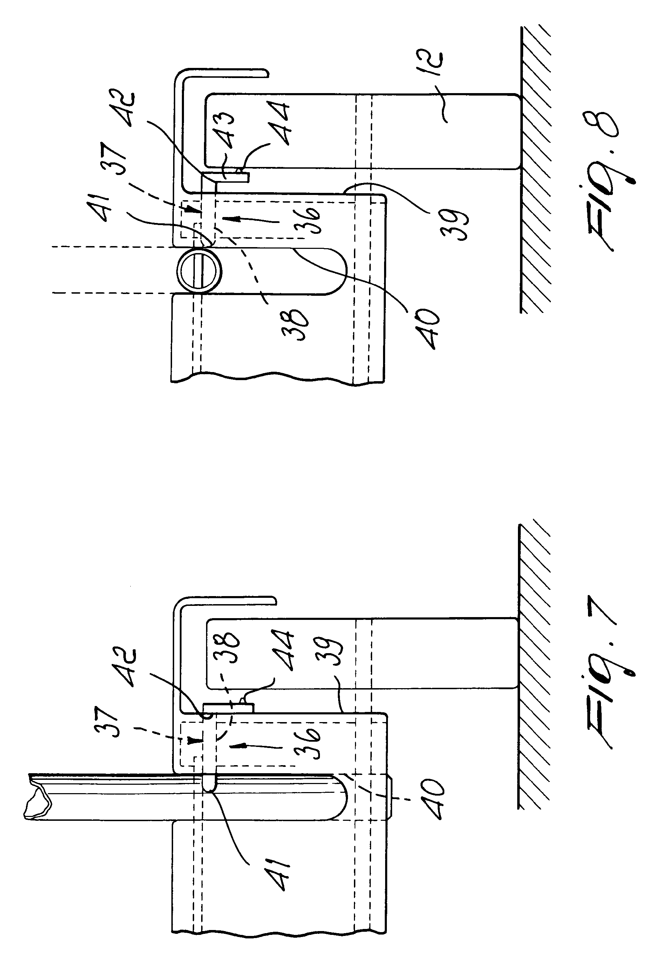

Figure 6 is a partially sectional side view of a detail of the cart according to the invention, with the handlebar disengaged from the active position;
Figure 7 is a front view of a detail of the cart according to the invention, with the handlebar in the active position;
Figure 8 is a partially sectional side view of a detail of the cart according to the invention, with the handlebar disengaged from the active position;

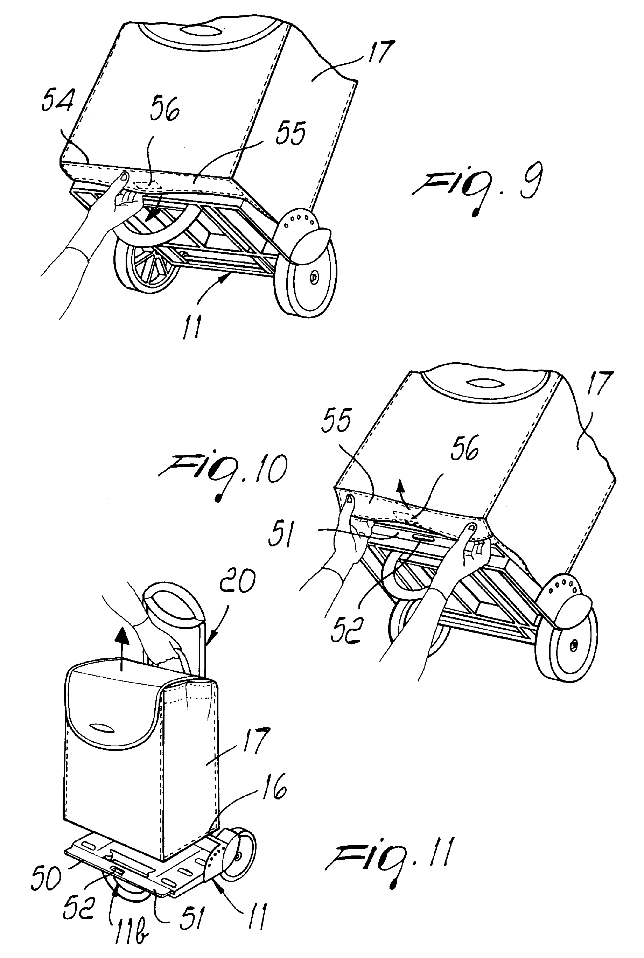

Figures 9, 10 and 11 are sequential perspective views of the cart according to the invention, with an associated carrier bag during release from the cart.

With reference to the figures, a cart according to the invention is generally designated by the reference numeral 10.

Such cart 10 comprises a base platform 11, on the front region 11 a of which there are two wheels 12 that are connected by means of a free shaft 13.

The platform 11 is formed by a lower portion 14, on which there are reinforcement ribs 15, and by an upper portion 16, which is substantially flat and is designed to support for example a bag 17.

The platform 11 forms a rear region 11 b, on which there is a supporting stand 18 that is fixed and rigidly coupled to the platform 11; such stand 18 is substantially parallel to the shaft 13.

The front region 11 a is substantially formed by a chassis 19 from which a handlebar 20 for towing/pushing extends.

The handlebar 20 is pivoted, parallel to the rotation axis of the wheels 12, to the base platform 11 by means of its lower end 22, as described in greater detail hereinafter.

Such handlebar 20 is substantially rigid and is formed by an upper grip end 21 for a user and by the lower end 22.

In particular, the handlebar is formed by a tubular element 23 that is shaped like an inverted letter U, in which the connecting portion of the U-shape is formed by the upper grip end 21, while the parallel end portions of the U-shape, designated by the reference numeral 24, form the lower end 22.

An outer shell 23a contoured like a flattened ellipse is provided on the connecting portion of the U-shape and is designed to act as a grip handle for the user.

The parallel end portions 24 are pivoted to the chassis 19 by means of a pivot 25 that is arranged so as to pass through respective holes (not designated by reference numerals in the figures) formed in the parallel portions 24.

In particular, the parallel end portions 24 are arranged substantially in corresponding pockets 26 formed in the chassis 19, which allow the closing rotation of the handlebar 20 toward the upper part 16 of the platform 11.

On the cart 10 there are means 27 for reversibly locking the handlebar 20 in the active position that is substantially perpendicular to the base platform (open position).

Such reversible locking means 27 comprise two tabs 28 that cantilever out from two supports 29 for the shaft 13 that are fixed substantially symmetrically on the lower portion 14 of the platform 11.

In particular, each tab 28 locks by means of its end a corresponding parallel end portion 24 of the lower end 22 on a corresponding abutment 30 that is arranged opposite with respect to said tab and is formed by the end wall of a respective pocket 26.

The two tabs 28 are further mutually connected (and in practice are monolithic) by means of a cross-member 31.

The bottom of a pushbutton 32 rests centrally with respect to the cross-member 31 and protrudes from the chassis 19 by way of a complementarily shaped opening 33; such opening 33 also acts as a vertical guide for the pushbutton.

The pushbutton 32 acts as an actuator for releasing the tabs 28, as described hereinafter.

The tabs 28 are in fact elastically flexible upon intervention of the user, who presses, preferably by means of a foot, the pushbutton 32, which pushes against the tabs 28, deforming them downward and releasing the portions 24 of the handlebar 20.

The tabs 28 have first guiding elements 34 that are suitable to facilitate the release of the portions 24 from their active position and likewise have second guides 35 that are suitable to facilitate the repositioning of the handlebar in the active position; in particular, the guides 34 and 35 form converging ramps that are arranged proximate to the end of the tabs 28.

The chassis 19 has, around the pushbutton 32, a contoured portion 33a to accommodate the tip of a foot of a user.

Means 36 for braking the wheels 12 act in the inactive position, termed closure position.

The braking means 36 are constituted by two pads 37, each of which acts by pushing against the side of the respective wheel 12 when the handlebar 20 is lowered onto the platform 11 for closure.

In particular, each pad 37 comprises a stem 38 that is arranged so as to pass through holes formed respectively in the corresponding side wall 39 of the chassis 19 that is directed toward the respective wheel 12 and on the side 40 of the pocket 26 that lies closest to the side wall 39.

A first end 41 of the stem 38, when the handlebar 20 is in the active position, protrudes partially into the pocket 26, and the head of the first end 41 is rounded.

A plate 43 protrudes from the second end 42 of the stem 38 and is substantially parallel to the wheel 12, on which there is a pointed protrusion 44 that is in contact with the wheel during braking.

A hole 45 is provided in the chassis 19 in order to allow insertion of the tip of an umbrella, the body of which (not shown in the figures) can be fixed to the bag 17 by means of the laces (also not shown in the figures) for fixing the bag 17 to the cart 10.

The outer edge 50 of the rear region 11b of the platform 11 forms a flat portion 51, on the centerline of which there is a through hole 52, which in this embodiment is slot-shaped.

The bag 17 has, on its bottom (not designated by reference numerals in the figures), at the lower edge 54, a band 55 that is sewn so as to form a region that is undercut on said bottom.

The bag 17 rests with its bottom on the upper part 16 of the platform 11, while the flat portion 51 is inserted between the band 55 and said bottom.

Substantially at the through hole 52, on the side of the band 55 that is directed toward the bottom and on the bottom itself, there are detachable engagement means constituted respectively by two complementary Velcro portions 56.

Such detachable engagement means further comprise laces (not shown in the figures) for fixing to the handlebar 20 of the carryall tray.

The operation of the invention is as follows.

During the active step (open position), the handlebar 10 is at right angles with respect to the platform 12 and is locked in position by means of the tabs 18, which keep it rested against the abutment 30.

By actuating the pushbutton 32, the tabs undergo an elastic deformation, moving downward and therefore allowing the handlebar to turn to the closed position.

During rotation for closure, the portions 24 of the handlebar push the pads 37 into contact with the wheels 12, braking them.

In this manner, the cart 10 is in the fully compact position and its wheels are braked, and therefore can be arranged in suitable confined parking spaces.

Preferably, all the components of the platform and of the chassis are made of molded plastics.

In practice it has been found that the invention thus described solves the problems noted in known types of carryall cart; in particular, the present invention provides a carryall cart that is composed of components that can be manufactured and mutually assembled easily.

Moreover, the present invention provides a carryall cart that when not in use easily assumes and retains a very compact position.

In practice, the materials employed, so long as they are compatible with the specific use, as well as the dimensions, may be any according to requirements and to the state of the art.

The disclosures in Italian Utility Model Application No. PD2003U000008 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A carryall cart, comprising a base platform (11), which lies between two wheels (12) and a supporting stand (18), and a handlebar (20) for towing/pushing, which is pivoted, parallel to the rotation axis of said wheels (12), to said base platform by one of its lower ends (22), said cart being provided with means (27) for the reversible locking of said handlebar (20) in the active position, in which it is substantially perpendicular to said base platform (11), said carryall cart being **characterized in that** said reversible locking means (27) comprise at least one elastically deformable tab (28) that locks by way of its tip said lower end (22) on a corresponding abutment (30) of said base platform (11) that is arranged opposite said tab (28), and an actuation system for releasing said tab (28) that can be actuated preferably with one's foot.

2. The carryall cart according to one or more of the preceding claims, **characterized in that** it comprises braking means (36) for said pair of wheels (12) which are active when said handlebar (20) is packed in the inactive position on said platform (11).

3. The carryall cart according to one or more of the preceding claims, **characterized in that** said platform (11) forms a rear region (11b) and a front region (11 a), said supporting stand (18) being fixed monolithically to said platform (11) on said rear region (11b); said supporting stand (18) being substantially parallel to the axis of a freely rotating shaft (13) for the connection and rotation of said pair of wheels (12), said front region (11a) being substantially formed by a chassis (19) from which said towing/pushing handlebar (20) protrudes.

4. The carryall cart according to one or more of the preceding claims, **characterized in that** said handlebar (20) is formed by a tubular element (23) that is shaped like an inverted letter U, in which the connecting portion of the U-shape forms the upper grip end (21) of said handlebar (20), while the parallel end portions of the U-shape (24) form said lower end (22).

5. The carryall cart according to claim 4, **characterized in that** on the connecting portion of said U-shape there is an outer shell (23a) that is shaped like a flattened ellipse to act as a grip handle for the user.

6. The carryall cart according to claim 4 or 5, **characterized in that** said parallel end portions (24) of the U-shape that form said lower end (22) are pivoted to said chassis (19) by means of a pivot (25) that is arranged so as to pass through respective holes formed in said parallel portions (24).

7. The carryall cart according to claim 6, **characterized in that** said parallel end portions (24) are substantially arranged in corresponding pockets (26) that are formed in said chassis (19) and are open upward in order to allow the rotation of said handlebar (20) so as to close onto said platform (11).

8. The carryall cart according to one or more of the preceding claims, **characterized in that** it comprises, on said chassis (19), a hole (45) to allow insertion of the tip of an umbrella.

9. The carryall cart according to claim 8, **characterized in that** said reversible locking means (27) comprise two of said one or more tabs (28), said two tabs (28) protruding in a cantilever fashion from two supports (29) for said shaft (13) that are fixed substantially symmetrically on the lower portion (14) of said platform (11).

10. The carryall cart according to one or more of the preceding claims, **characterized in that** said abutment (30) is formed by the end wall of said pockets (26).

11. The carryall cart according to one or more of the preceding claims, **characterized in that** said tabs (28) are rigidly connected to each other by means of a cross-member (31).

12. The carryall cart according to claim 11, **characterized in that** said actuation system for releasing said tabs (28) comprises a pushbutton (32), the bottom of which rests on said cross-member (31), said pushbutton (32) being accessible to a user from the outside of said cart.

13. The carryall cart according to claim 12, **characterized in that** said pushbutton (32) protrudes from said chassis (19) by means of a complementarily shaped opening (33), said chassis (19) having, around said pushbutton (32), a contoured portion (33a) that is suitable to allow the accommodation of the tip of a foot of a user.

14. The carryall cart according to one or more of the preceding claims, **characterized in that** said tabs (28) have first guiding elements (34) that are suitable to facilitate the release of said parallel end portions (24) from their active position and likewise have second guiding elements (35) that are suitable to facilitate the repositioning of said handlebar (20) in the active position, said first and second guiding elements (34, 35) forming converging ramps that are arranged proximate to the end of said tabs (28).

15. The carryall cart according to one or more of the preceding claims, **characterized in that** said braking means (36) comprise at least one pad (37) for a corresponding one of said wheels (12), which acts by pushing against the side of the corresponding wheel (12), said at least one pad (37) being pushed toward said corresponding wheel (12) by the rotation of the lower end of said handlebar toward the inactive position on said platform (11).

16. The carryall cart according to claim 15, **characterized in that** said at least one pad (37) comprises a stem (38) that is arranged so as to pass through holes formed respectively in the corresponding side wall (39) of said chassis (19) that faces a respective wheel (12) and on the side (40) of said pocket (26) that is closest to said side wall (39).

17. The carryall cart according to claim 16, **characterized in that** said stem has a first end (41) and a second end (42), said first end (41), when said handlebar (20) is in the active position, protruding partially into said pocket (26); the head of said first end (41) being rounded.

18. The carryall cart according to claim 17, **characterized in that** a plate (43) protrudes from said second end (42) of said stem (38) and is substantially parallel to the corresponding wheel (12), a pointed protrusion (44) being provided on said plate and being in contact with said wheel (12) during braking.

19. The carryall cart according to one or more of the preceding claims, **characterized in that** said rear region (11b) of said platform (11) forms an outer edge (50) that forms a flat portion (51) on which there is at least one through hole (52).

20. The carryall cart according to claim 19, **characterized in that** one of said one or more through holes (52), shaped like a slot, is provided on said flat portion (51).

21. A carryall bag comprising lateral containment walls, a supporting bottom and means for detachable coupling to a carryall cart, **characterized in that** it comprises, on said bottom, at its lower edge (54), a band (55) that is fixed to the structure of the bag so as to form an undercut region on said bottom, said detachable engagement means being provided on the side of said band (55) that faces said bottom and on said bottom.

22. The carryall bag according to claim 21, **characterized in that** said detachable engagement means are constituted by at least two complementary portions of Velcro (56).

23. The carryall bag according to claim 22, **characterized in that** said detachable engagement means comprise laces for fixing to a handlebar of said carryall cart.

24. The carryall cart according to claims 19 or 20, **characterized in that** it comprises a carryall bag according to one or more of claims 21 to 23, said cart (10) and said bag (17) being provided respectively with through holes (52) and with complementary reversible engagement means that are distributed in equal numbers and in corresponding positions.
